Europäisches Patentamt

European Patent Office

Office européen des brevets

(11) Numéro de publication: **0 426 529 A1**

## DEMANDE DE BREVET EUROPEEN

(21) Numéro de dépôt: 90402990.7

(51) Int. Cl.⁵: **C04B 41/50**

(22) Date de dépôt: 24.10.90

(30) Priorité: 31.10.89 FR 8914276

(43) Date de publication de la demande:
08.05.91 Bulletin 91/19

(84) Etats contractants désignés:
AT BE CH DE DK ES FR GB GR IT LI LU NL SE

(71) Demandeur: ATOCHEM
4, Cours Michelet La Défense 10 Cédex 42
F-92091 Paris La Défense(FR)

(72) Inventeur: De l'Eprevier, Alain
Immeuble Charcot, "Champaret"
F-38300 Bourgoin-Jallieu(FR)
Inventeur: Colombier, Christian
3 rue de Sèze
F-69006 Lyon(FR)

(74) Mandataire: Rochet, Michel et al
ATOCHEM Département Propriété
Industrielle La Défense 10 Cédex 42
F-92091 Paris La Défense(FR)

(54) Revêtements en céramique, procédé de fabrication desdits revêtements et substrats ainsi revêtus.

(57) L'invention a pour objet des revêtements en céramique. Ces revêtements sont utilisables notamment dans la réalisation d'enceintes chauffantes.
Ces revêtements sont constitués d'une céramique siliciée renfermant du carbone libre.

EP 0 426 529 A1

## REVETEMENTS EN CERAMIQUE, PROCEDE DE FABRICATION DESDITS REVETEMENTS ET SUBSTRATS AINSI REVETUS

La présente invention, réalisée dans les laboratoires de la demanderesse et de la Société PROCELIS S.A., a pour objet des revêtements en céramique destinés notamment à améliorer les transferts thermiques, un procédé de fabrication desdits revêtements, ainsi que les substrats portant lesdits revêtements.

W. BAUER et R. STEINHARDT (Freiberg Forschungsh A, A 738, 8-14 1986) ont montré que certains revêtements en $Fe_2O_3$ ou SiC étaient de nature à améliorer l'efficacité thermique de fours et à réduire ainsi leur consommation d'énergie.

L'effet de revêtement à base de zircone à également été décrit par J. HELLANDER (Iron & Steel Engineer, p.40, June 1987) ainsi que par J. CLEMENTS (Heat Treatment of Metals 1986.3.p 76).

A. FUKUDA et M. MAKI (demande de brevet japonais 60/251185) ont réalisé des revêtements à l'aide d'une solution toluénique de borosiloxane chargé de poudres de $ZrO_2$, $TiO_2$, $Al_2O_3$, $SiO_2$ et/ou $CeO_2$, SiC et $Si_3N_4$, cette solution étant appliquée comme une peinture.

K. SHIOYA (EP-A-0117935) a appliqué par projection une solution aqueuse de silicate de potassium chargée de diverses céramiques en poudre.

A. FUKUDA, Y. KAMEKA et M. MAKI (demande de brevet japonais 61/149740) ont utilisé une suspension d'oxydes de Si, Ti, Al, Zr, Fe, Mn, Cu, Co et Ni dans une résine/huile silicone.

S. MITSUMOTO, T. NISHIMORI, K. KANAYAMA ont décrit des revêtements à base d'hydroxydes de métaux alcalins (demande de brevet japonais 60/228683).

C. WICKERSHAM et E. FOSTER (USP 4,414,085) ont décrit des procédés de déposition en phase vapeur d'une couche de carbone sur un substrat, à partir d'un carbure d'au moins un élément choisi dans le groupe constitué par Si, B, Ti, Zr, Hf, V, Nb, Ta, Cr, Mo et W, et d'un gaz hydrocarboné décomposable en carbone et hydrogène, tel que l'acétylène.

M. MAKI, Y. KANEKO, A. FUKUDA et M. ISOYA (demande de brevet japonais 62/167271) ont décrit un revêtement sur céramique ou sur métal, formés d'un liant réticulé en polytitanocarboxysilane, de $ZrO_2$, comme additif principal, de $SiO_2$, $Al_2O_3$ ou $TiO_2$ et d'un oxyde de Fe, Mn, Cu, Ni ou Co, cette composition étant mise en oeuvre en phase solvant (toluène + N.méthylpyrrolidone).

T. KAWACHI et C. OKAMOTO (demande de brevet japonais 62/256875) ont proposé des compositions de revêtement comprenant une résine silicone associée à une poudre céramique et à divers additifs tels que $ZrO_2$, $TiO_2$, $MnO_2$, $Fe_2(SO_4)_3$, $CrO_2$.

Dans ce qui précède, les numéros indiqués pour des demandes de brevet japonais sont les numéros des demandes publiées avant examen.

L'invention propose des revêtements notamment utilisables dans la réalisation d'enceintes destinées à être portées à une température élevée, telles que les fours (sans que cette indication limite la portée de l'invention), ces revêtements permettant un excellent transfert de chaleur entre l'élément chauffant et les pièces à chauffer.

L'invention propose également des revêtements permettant d'atteindre plus rapidement la température souhaitée (par comparaison avec l'absence de revêtement).

L'invention propose encore des revêtements conduisant à une plus grande homogénéité de la température dans l'enceinte (même remarque que ci-avant).

L'invention propose encore des revêtements permettant à la fois des économies d'énergie, une augmentation de la productivité et de la qualité.

D'autres avantages des revêtements conformes à l'invention apparaîtront à la lecture de ce qui suit.

Les revêtements conformes à l'invention sont caractérisés en ce qu'ils comprennent une céramique essentiellement non oxydée et contenant du carbone libre.

L'invention concerne plus spécifiquement des revêtements comprenant une céramique contenant de 2 à 40 % en poids de carbone libre.

L'expression "essentiellement non oxydée" signifie que la céramique a une teneur en oxygène lié inférieure à 25 % en poids, c'est-à-dire que ladite céramique est essentiellement carburée ou nitrurée.

Plus précisément, les céramiques constituant les revêtements conformes à l'invention sont constituées de silicium et de carbone, et éventuellement d'azote et/ou d'oxygène [dans les conditions définies ci-avant] et/ou d'un ou plusieurs métaux.

Le ou les métaux mentionnés ci-avant peuvent notamment être choisis dans le groupe constitué par B, Al, Ti, V, Cr, Zr, Mo, Hf, Ta, W, Y, Th, La et les métaux de la série des lanthanides.

Au sens de l'invention, l'expression "carbone libre" désigne les atomes de carbone liés à d'autres atomes de carbone, c'est-à-dire exclut les atomes de carbone liés exclusivement à d'autres éléments et notamment aux atomes de silicium, d'azote et d'oxygène. Le pourcentage de carbone libre (en poids) est défini par l'équation

$$C \% \ (\text{en poids}) = \frac{M_C \ \times \ C_{VL} \ \times \ 100}{4 \ \times \ M_E}$$

$C_{VL}$ désignant le nombre de moles de valences d'atomes de carbone liées à d'autres atomes de carbone
$M_C$ désignant la masse molaire du carbone
$M_E$ désignant la masse de l'échantillon

Pour la détermination d'un pourcentage de carbone libre d'une céramique ayant une composition globale élémentaire donnée, on admettra que la totalité des valences des atomes d'azote et d'oxygène, s'il y en a, sont liées aux atomes de silicium et que toutes les valences de silicium sont liées à des atomes de carbone et, le cas échéant, d'azote et/ou d'oxygène.

L'invention a également pour objet un procédé de fabrication des revêtements sus-visés, ce procédé étant caractérisé en ce qu'il consiste à déposer sur le substrat un précurseur de céramique, puis à provoquer la formation, sur ledit substrat, d'un revêtement constitué par une céramique ayant les caractéristiques indiquées précédemment.

Le précurseur de céramique peut être choisi dans une large famille de produits, pour autant que ces précurseurs génèrent des céramiques contenant du carbone libre.

Parmi ces précurseurs, on mentionnera en premier lieu les précurseurs siliciés et notamment les polysilazanes, les polysiloxazanes, les polycarbosilanes, les polysilanes, c'est-à-dire des produits contenant au moins du silicium et du carbone et, le cas échéant, de l'azote et/ou de l'oxygène.

La préparation de ces précurseurs de céramiques est connue et ne constitue pas en elle-même un objet de l'invention. On peut se référer notamment aux brevets et demandes de brevets français n° 87.18215, 88.08384, 88.10952 dont le contenu est incorporé par référence . A titre purement illustratif, on mentionnera simplement les précurseurs obtenus par réaction d'un halosilane éventuellement organosubstitué sur un composé azoté, et notamment sur de l'ammoniac, une amine et en particulier une amine primaire, une hydrazine et éventuellement de l'eau. On peut naturellement utiliser aussi bien des mélanges des composés azotés précités, lors de la préparation de précurseurs, que des mélanges de précurseurs en vue de la préparation des céramiques.

Parmi ces précurseurs, on donne la préférence dans l'invention aux produits conduisant à des céramiques renfermant le taux de carbone libre indiqué précédemment et présentant la composition élémentaire suivante (en poids) : Si : 30 à 70 % ; C : 5 à 35 % ; N : 2 à 30 % ; O : 0 à 15 % (indépendamment des métaux éventuellement présents), les éléments précités étant combinés essentiellement sous forme de $Si_3N_4$, SiC et $SiO_2$, indépendamment du carbone libre.

L'application des précurseurs de céramiques sur le substrat à revêtir peut se faire de différentes manières, compte tenu en particulier de l'état physique desdits précurseurs et de la nature des substrats. Lorsqu'il s'agit de précurseurs liquides, par exemple en-dessous de 50° C, on peut les appliquer directement en suivant les méthodes de mise en oeuvre des peintures, c'est-à-dire au pinceau, à la spatule ou encore par projection, avec ou sans utilisation de solvant ou diluant. Lorsqu'il s'agit de précurseurs solides dans la même gamme de température, on peut les appliquer sous forme de solution ou de dispersion ou les mettre en oeuvre par projection à l'état de poudre dans une flamme susceptible de ramollir le produit.

D'une manière générale, et pour autant que l'état physique du précurseur le permette, on recommandera l'application des précurseurs à l'état pur (tels quels) sur des substrats poreux, les substrats non poreux étant plutôt imprégnés à partir d'une solution de précurseur.

Dans le cas des précurseurs susceptibles de se dégrader au contact de l'air, il conviendra de les mettre en oeuvre sous atmosphère inerte, par exemple sous atmosphère d'azote ou d'argon. Les précurseurs peuvent être déposés en une fois ou en plusieurs fois, séparées par une pyrolyse du revêtement précédent.

L'épaisseur du revêtement peut varier dans de larges limites. A titre purement indicatif, cette épaisseur peut aller de 1 μm à 1 mm.

Ces revêtements sont applicables sur des substrats de natures diverses. Comme exemples de tels substrats, on citera notamment les substrats métalliques, en particulier en acier, les substrats constitués par des matériaux réfractaires, en particulier les substrats à base de fibres céramiques, lesdites fibres pouvant être notamment des fibres silicoalumineuses contenant en général 45 à 60 % d'alumine et, le cas échéant, du chrome, ou encore des fibres polycristallines à fort taux d'alumine (par exemple entre 72 et 94 %).

Les précurseurs formant le revêtement des substrats précités peuvent être pyrolysés en céramique par chauffage à une température généralement au moins égale à 800°C et le plus souvent supérieure à 900°C, la température maximum pouvant atteindre 1250°C, voire davantage. D'une manière générale, cette pyrolyse est effectuée sous atmosphère inerte telle qu'une atmosphère d'azote.

Les revêtements conformes à l'invention et les substrats portant ces revêtements qui constituent également un objet de l'invention peuvent être utilisés dans la confection de matériaux divers, et en particulier d'enceintes destinées à être portées à des températures élevées, par exemple des fours, ladite température pouvant atteindre jusqu'à 1200°C.

L'utilisation de ces revêtements, sur tout ou partie des surfaces constituant ladite enceinte permet d'améliorer sensiblement le transfert de chaleur entre l'élément chauffant (paroi de l'enceinte) et la pièce à chauffer.

Par ailleurs, on observe, par rapport à des parois non revêtues, une montée en température plus rapide et une meilleure homogénéité de cette température.

Les exemples suivants illustrent l'invention.


## EXEMPLE 1

### 1/ Précurseur de céramique ($P_1$) :

On utilise un polysiloxazane, obtenu par réaction d'hydrazine, de chlorosilane et d'eau en suivant le mode opératoire décrit dans la demande de brevet français n° 87.18215 (exemple 8).

Le précurseur $P_1$ est un liquide visqueux à température ambiante et est mis en oeuvre tel quel à l'aide d'une spatule.


### 2/ Substrat :

Le substrat est constitué par des plaquettes de réfractaire fibreux de la famille des silicoalumineux (produit commercialisé sous la marque PROCELIT 160 ® par la société PROCELIS).


### 3/ Mise en oeuvre :

Sur les plaquettes précitées, de dimensions 100 mm x 40 mm x 10 mm, on applique le précurseur $P_1$ - (poids déposé : environ 500 g/ m²). Cette application se fait sous courant d'azote sec.

Les plaquettes revêtues sont cuites à 1000°C sous balayage d'azote (montée de la température de 100°C par heure, puis palier d'une heure à 1000°C puis refroidissement naturel sous azote).

Après refroidissement, les plaquettes sont immergées dans l'eau à 20°C pendant 24 heures puis séchées sous vide en étuve (température : 80°C).

La céramique obtenue au cours de cette pyrolyse présente la composition suivante : Si : environ 44,3 % ; C : environ 28,7 % ; N : environ 19,1 % et O : environ 5,1 %, et un taux de carbone libre de 24 %, les constituants étant combinés en $Si_3N_4$ (47,75 %), $SiO_2$ (9,6 %) et SiC (16 %)


### 4/ Fabrication d'enceintes :

On réalise deux enceintes d'environ 1 litre de capacité, dont les parois latérales sont réalisées, la première avec 10 plaquettes 100 x 40 x 10 mm en PROCELIT 160 ® et la seconde avec 10 plaquettes identiques mais revêtues sur toute leur surface au moyen de la céramique décrite ci-avant.

Dans chacune des chambres, on place une charge munie en son centre d'un thermocouple qui permet de suivre la montée en température de celle-ci .

Les deux chambres sont placées de façon symétrique dans un four électrique à chauffage rapide, dont on suit aussi la température par un thermocouple.

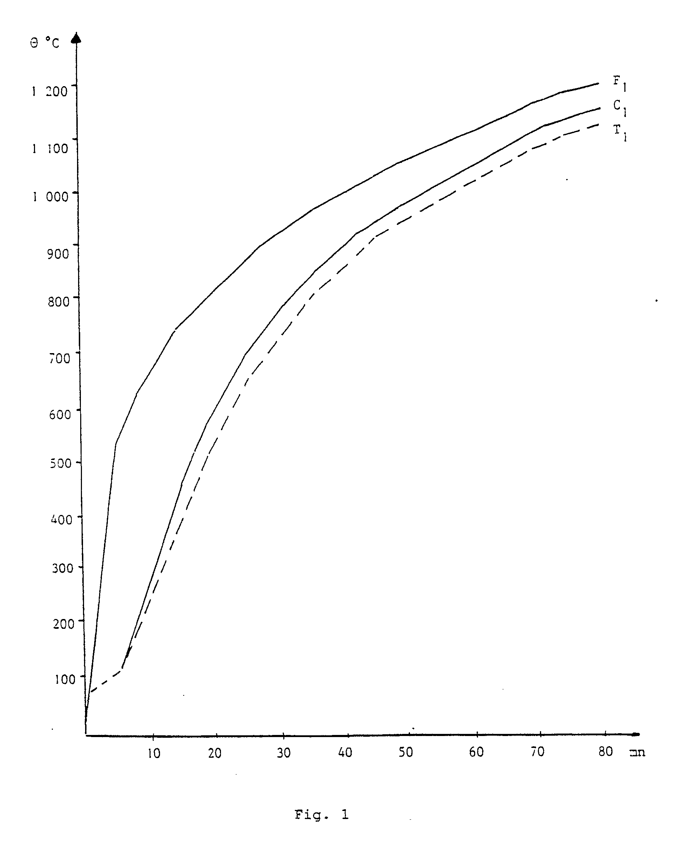

L'évolution de la montée en température du four ($F_1$), de la charge placée dans l'enceinte portant les surfaces revêtues conformément à l'invention ($C_1$) et de la charge placée dans l'enceinte non revêtue, à

4

titre de témoin (T₁) est reportée sur la courbe de la figure 1 où Θ°C désigne la température et mn la durée.

On constate que, au bout d'une période donnée de chauffage du four, la température de la charge C₁ est toujours supérieure à celle du témoin T₁, cette différence de température pouvant atteindre 50°C.

De même, on constate qu'une température donnée est toujours atteinte plus rapidement par la charge C₁ que par la charge T₁, ce qui montre à l'évidence l'efficacité du revêtement conforme à l'invention.

## EXEMPLE 2

Le substrat et la fabrication de l'enceinte sont les mêmes que dans l'exemple 1.

Le précurseur de céramique (P₂) est un polysiloxazane obtenu en suivant le mode opératoire décrit dans la demande de brevet français n° 87.18215 (exemple 4).

Ce précurseur P₂ est un liquide visqueux, mis en oeuvre tel quel sur le substrat (poids déposé : environ 370 g/m²).

Après cuisson à 1000°C, dans les conditions décrites ci-avant puis refroidissement, on renouvelle une fois, toujours sous courant d'azote, l'imprégnation du substrat (portant ainsi une première couche de revêtement céramique) au moyen du précurseur P₂.

La céramique résultant des pyrolyses précédentes présente la composition approximative suivante : Si : environ 52,5 % ; C : environ 15,1 % ; N : environ 22,7 % et O : environ 9,2 % et un taux de carbone libre d'environ 10,6 %, les éléments étant combinés en $Si_3N_4$ : 56,75 ; $SiO_2$ : 17,3 et $SiC$ : 14,8.

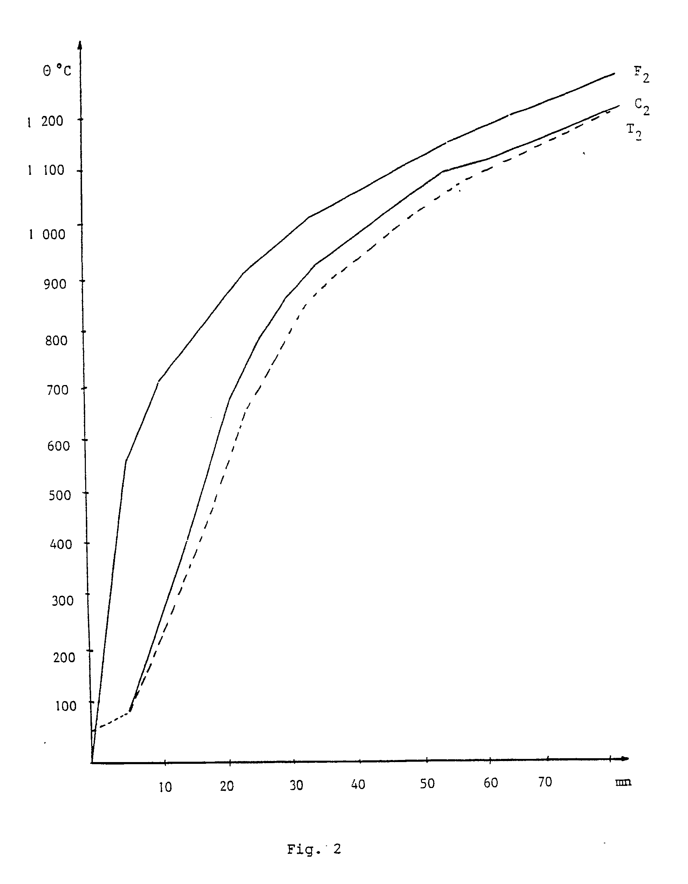

La figure 2 permet de suivre l'évolution de la température du four (F₂), de la charge placée dans l'enceinte témoin (T₂), Θ°C désignant la température et mn la durée.

On constate un retard sensible dans la montée en température de la charge T₂ par rapport à la charge C₂ et, pour une durée donnée de chauffage du four, une valeur de température de la charge T₂ inférieure (parfois jusqu'à 80°C) à la température atteinte par la charge C₂, ce qui confirme l'efficacité du revêtement conforme à l'invention.

## Revendications

**1.** Revêtement en céramique, caractérisé en ce qu'il comprend une céramique essentiellement non oxydée et contenant du carbone libre.

**2.** Revêtement selon la revendication 1, caractérisé en ce qu'il comprend une céramique contenant 2 à 40 % en poids de carbone libre, défini par l'équation

$$C \text{ \% (en poids)} = \frac{M_C \times C_{VL} \times 100}{4 \times M_E}$$

$C_{VL}$ désignant le nombre de moles de valences d'atomes de carbone liées à d'autres atomes de carbone

$M_C$ désignant la masse molaire du carbone

$M_E$ désignant la masse de l'échantillon

**3.** Revêtement selon l'une quelconque des revendications 1 ou 2, caractérisé en ce que la céramique est essentiellement constituée de silicium et de carbone, et éventuellement d'azote et/ou d'oxygène, la teneur en oxygène lié aux autres composants étant inférieure à 25 % en poids.

**4.** Revêtement selon la revendication 3, caractérisé en ce que la céramique comprend, en outre, au moins un métal choisi dans le groupe constitué par B, Al, Ti, V, Cr, Zr, Mo, Hf, Ta, W, Y, Th, La et les métaux de la série des lanthanides.

**5.** Revêtement selon l'une quelconque des revendications 1 à 4, caractérisé en ce que la céramique présente la composition élémentaire suivante : Si : 30 à 70 %, C : 5 à 35 % ; N : 2 à 30 % ; O : 0 à 15 %, essentiellement combinés sous forme de $Si_3N_4$, $SiC$ et $SiO_2$, indépendamment du carbone libre.

**6.** Procédé de fabrication des revêtements selon l'une quelconque des revendications 1 à 5, par dépôt sur un substrat d'un précurseur de céramique, puis formation de la céramique par pyrolyse dudit précurseur sur le substrat.

**7.** Procédé selon la revendication 6, caractérisé en ce que le précurseur est choisi dans le groupe constitué par les polysilazanes, polysiloxazanes, polycarbosilanes et polysilanes.

EP 0 426 529 A1

**8.** Procédé selon l'une quelconque des revendications 6 et 7, caractérisé en ce que le précurseur est mis en oeuvre à l'état liquide.

**9.** Procédé selon l'une quelconque des revendications 6 à 8, caractérisé en ce que le précurseur est mis en oeuvre sous forme de solution ou dispersion.

**10.** Procédé selon l'une quelconque des revendications 6 à 9 caractérisé en ce que la couche de précurseur présente une épaisseur comprise entre 1 $\mu$m et 1 mm.

**11.** Procédé selon la revendication 10, caractérisé en ce que l'épaisseur est obtenue par plusieurs dépôts successifs du précurseur, séparés par une pyrolyse dudit précurseur.

**12.** Procédé selon l'une quelconque des revendications 6 à 11, caractérisé en ce que la pyrolyse est effectuée à une température au moins égale à 800°C.

**13.** Procédé selon la revendication 12, caractérisé en ce que la pyrolyse est effectuée à une température comprise entre 900 et 1250°C.

**14.** Procédé selon l'une quelconque des revendications 6 à 13, caractérisé en ce que le substrat est choisi dans le groupe constitué par les métaux et les matériaux réfractaires.

**15.** Procédé selon la revendication 14, caractérisé en ce que le matériau réfractaire est à base de fibres céramiques de la famille des silicoalumineux.

**16.** Substrat portant un revêtement selon l'une quelconque des revendications 1 à 5.

Fig. 1

Fig. 2

**Office européen
des brevets**

**RAPPORT DE RECHERCHE
EUROPEENNE**

Numéro de la demande

**EP 90 40 2990**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | EP-A-0 327 773   (ATOCHEM)<br>* Revendications 13,14; page 5, lignes 15-39; exemples 4,8 *<br>— — — | 1,5-10,<br>12-14,16 | C 04<br>B 41/50 |
| Y | | 2,4,11,15 | |
| Y | US-A-4 618 591   (OKAMURA et al.)<br>* Revendications 1,3,7,8; colonne 1, ligne 59 - colonne 2, ligne 30; colonne 6, lignes 10-37; colonne 7, ligne 13 - colonne 8, ligne 7; exemple 1 *<br>— — — | 2 | |
| A | | 1,3,6-9,<br>12,13 | |
| Y | EP-A-0 337 832   (AEROSPATIALE SOCIETE NATIONALE IND.)<br>* Revendications 1-6,11; colonne 1, lignes 8-20; colonne 2, ligne 53 - colonne 3, ligne 20; colonne 3, ligne 37 - colonne 4, ligne 10; exemple 4 *<br>— — — | 4,11,15 | |
| A | EP-A-0 311 258   (THE STANDARD OIL CO.)<br>* Revendications 1,2,4; colonne 3, ligne 41 - colonne 4, ligne 55; colonne 6, lignes 6-13; colonne 7, lignes 29-44; colonne 10, lignes 1-38 *<br>— — — | 1,4,6-9,<br>11-14,16 | |
| D,A | DERWENT JAPANESE PATENTS GAZETTE, semaine 8605, 11 décembre 1985, section Chemical, abrégé no. 31454/05, 11 décembre 1985, Derwent Publications Ltd, Londres, GB;<br>& JP-A-60 251 185 (MATSUSHITA ELEC. IND. K.K.) 25-05-1984<br>— — — — — | 1,4 | |

**DOMAINES TECHNIQUES RECHERCHES (Int. Cl.5)**

C 04 B

Le présent rapport de recherche a été établi pour toutes les revendications

| Lieu de la recherche | Date d'achèvement de la recherche | Examinateur |
|---|---|---|
| La Haye | 12 décembre 90 | NORGREN-OLSSON |